Europäisches Patentamt

European Patent Office

Office européen des brevets

(19)

(11) Veröffentlichungsnummer: **0 280 110 B1**

(12) **EUROPÄISCHE PATENTSCHRIFT**

(45) Veröffentlichungstag der Patentschrift: **13.05.92**

(51) Int. Cl.5: **G01C 3/10**

(21) Anmeldenummer: **88101873.3**

(22) Anmeldetag: **09.02.88**

(54) **Sensor mit integrierter Signalverarbeitung für ein- bis dreidimensionale Positionierung.**

(30) Priorität: **09.02.87 DE 3703904**

(43) Veröffentlichungstag der Anmeldung:
**31.08.88 Patentblatt 88/35**

(45) Bekanntmachung des Hinweises auf die
Patenterteilung:
**13.05.92 Patentblatt 92/20**

(84) Benannte Vertragsstaaten:
**AT CH DE FR GB IT LI**

(56) Entgegenhaltungen:
**WO-A-80/02455**
**FR-A- 2 392 470**
**US-A- 3 554 646**
**US-A- 4 477 168**
**US-A- 4 575 211**

**PATENT ABSTRACTS OF JAPAN, Band 11,
Nr. 109 (P-564)[2556], 7. April 1987; & JP-A-61
259 109 (MATSUSHITA ELECTRIC IND. CO.
LTD) 17-11-1986**

(73) Patentinhaber: **F. W. BREITHAUPT & SOHN
GMBH & CO. KG
Adolfstrasse 13
W-3500 Kassel(DE)**

(72) Erfinder: **Breithaupt, Hans-Hellmut
Vor der Prinzenquelle 37
W-3500 Kassel(DE)**

(74) Vertreter: **von Bülow, Tam, Dr. et al
Patentanwalt Mailänder Strasse 13
W-8000 München 90(DE)**

**Beschreibung**

Die Erfindung bezieht sich auf Sensoren mit integrierter Signalverarbeitung gemäß dem Oberbegriff des Anspruches 1.

Ein solcher Sensor ist aus Patent abstracts of Japan, Band 11, Nr. 109 (P-564) [2556], 07. April 1987; JP-A-61 259 109 bekannt. Dort sind eine Lichtquelle und ein davon im Abstand angeordnetes optisches Element in Form eines Spiegels als eine verschiebbare Sendeeinheit vorgesehen, die einen Lichtstrahl zur Reflektion auf ein Objekt richtet. Das von dem Objekt reflektierte Licht wird einer synchron mit der Sendeeinheit bewegbaren Empfangseinheit zugeleitet, die in fester räumlicher Beziehung zueinander im Strahlengang hintereinander eine Linse, eine Schlitzblende und ein zweidimensionales Sensorfeld mit einer Vielzahl unterscheidbarer, lichtempfindlicher Punkte aufweist. Die Linse und die Schlitzblende wirken als Mustergeber, der das reflektierte Licht zu einem Muster formt, das auf dem Sensorfeld abgebildet wird. An das Sensorfeld ist eine Auswerteeinrichtung angeschlossen, die in Abhängigkeit vom elektrischen Zustand der lichtempfindlichen Punkte die gewünschte Meßgröße bestimmt, die bei dem bekannten Sensor eine Entfernung ist.

In der Druckschrift WO-A-80 02 455 ist eine Meßanordnung beschrieben, mit der im Flugsimulator genau der Abstand zwischen der Modellandschaft und einem Sensorkopf bestimmt werden kann. Diese Meßanordnung umfaßt einen an dem Sensorkopf befestigten Laser, der einen Strahl nach unten auf die Modellandschaft richtet. Vom Bestrahlungsfleck reflektiertes Licht durchläuft zunächst einen Filter und dann eine Linse und trifft auf ein Sensorfeld, welches aus einer Reihenanordnung von elektrooptischen Elementen besteht. In Abhängigkeit davon, welche elektrooptischen Elemente mit Licht beaufschalgt worden sind, läßt sich aus den Ausgangssignalen dieser Elemente der Abstand zwischen der jeweiligen Modelloberfläche und dem Sensorkopf berechnen.

In der Druckschrift US-A-35 54 646 ist eine Abstandsmeßeinrichtung beschrieben, mit der der Abstand zwischen der Meßeinrichtung und Gegenständen bestimmt werden kann, die eine reflektierende Oberfläche aufweisen. Die Abstandsmeßeinrichtung umfaßt eine Lichtquelle, einen Drehspiegel, einen Photodetektor und Auslesemittel. Der Photodetektor, der Spiegel und die reflektierende Oberfläche des Körpers werden relativ zueinander so ausgerichtet, daß ein rechtwinkliges Dreieck gebildet wird. Ein Schenkel des rechten Winkels entspricht dem Abstand zwischen der Mitte des Drehspiegels und der optischen Achse des Photodetektors. Der zweite Schenkel des rechten Winkels ist der unbekannte Abstand zwischen dem Gegenstand und dem Photodetektor längs dessen optischer Achse. Die Auslesemittel erfassen die Drehstellung des Drehspiegels und damit den Winkel zwischen der Hypothenuse des rechteckigen Dreiecks und der Kathete bekannter Länge, wobei aus diesen beiden Größen der unbekannte Abstand bestimmt wird. Der Drehspiegel wird fortlaufend von einem Motor angetrieben.

Die US-A-4,575,211 zeigt eine Entfernungsmeßeinrichtung mit einer drehbaren Lichtquelle, in deren Strahlengang folgende Bauteile hintereinander liegen: eine Linse, ein Strahlteiler, das auszumessende Objekt, eine weitere Linse und ein photoelektrischer Sensor. Der Strahlteiler spaltet den Lichtstrahl der Lichtquelle im einen Hauptstrahl nullter Ordnung und zwei Teilstrahlen erster Ordnung auf. Durch Bewegen der Lichtquelle werden zeitlich nacheinander diese einzelnen Teilstrahlen auf den photoelektrischen Wandler geleitet und von diesem ausgewertet. In einem weiteren Ausführungsbeispiel können auch drei photoelektrische Wandler, nämlich je einer pro Teilstrahl, vorhanden sein.

Aufgabe der Erfindung ist es, ausgehend von dem Oberbegriff des Anspruches 1, Sensoren zur Bestimmung verschiedener Raumgrößen anzugeben.

Diese Aufgabe wird durch das im Kennzeichen des Patentanspruches 1 angegebene Merkmal gelöst. Vorteilhafte Ausgestaltungen und Weiterbildungen der Erfindung sind den abhängigen Patentansprüchen zu entnehmen.

Der wesentliche Grundgedanke der Erfindung liegt darin, zwischen optischen Elementen, die sinnbildlich gesprochen den vom Sensor ausgesandten (Licht-) Strahl am Auftreffpunkt am Objekt "sehen" und einem Sensorfeld, dem der Lichtauftreffpunkt am Objekt abgebildet wird, einen gegenüber dem Sensorfeld verschiebbaren Mustergeber anzuordnen, der diffus reflektiertes Licht des Meßstrahls als Muster (z.B. dünner Strich) auf das Sensorfeld projiziert. Der Mustergeber kann dabei eine einfache Blende sein. Er kann auch eine Optik mit verschiedenen Linsen, z.B. auch mit Zylinderlinsen sowie mit Blenden sein. Die Form des von dem Mustergeber erzeugten Musters kann im Prinzip beliebig sein und ist nicht auf den erwähnten Strich beschränkt.

Der vom Sensor ausgehende Lichtstrahl kann direkt oder gegegebenenfalls über optische Elemente auf den Mustergeber gerichtet werden, wodurch das Muster auf das Sensorfeld durch diesen direkten Strahl abgebildet bzw. projiziert wird.

Mit den im Rahmen der Erfindung vorgesehenen Sensoren lassen sich unter anderem Winkel, Höhen, Lagen und Formen von Gegenständen sowie auch Neigungen von Objekten, Winkel und Richtungen bezogen auf magnetisch Nord, Volumen, Füllstände und Profile von Gegenständen messen.

Im folgenden wird die Erfindung anhand von Ausführungsbeispielen im Zusammenhang mit der Zeichnung ausführlicher erläutert. Es zeigt:

Fig. 1    Eine Prinzipskizze des Sensors;

Fig. 2    Eine Prinzipskizze des Sensors zur Messung von Winkeln nach einem ersten Ausführungsbeispiel; und

Fig. 3    Eine Prinzipskizze des Sensors beim Einsatz zur Messung von Neigungen von Objekten gegenüber der Lotrechten nach einem zweiten Ausführungsbeispiel.

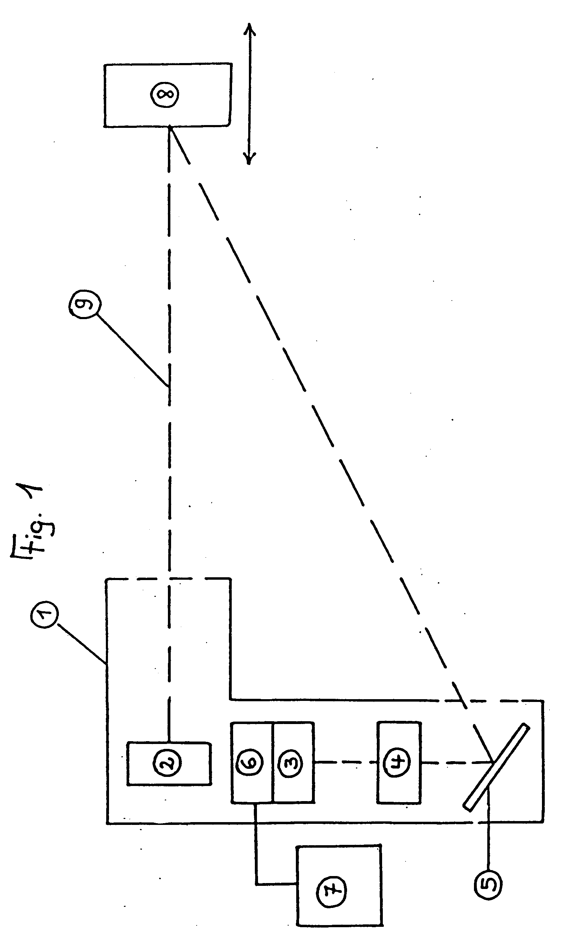

Fig. 1 zeigt den Sensor, welcher in einem Gehäuse 1 einen Sender 2 aufweist, der in festgelegter Richtung einen Meßstrahl 9 aussendet. Vorzugsweise ist der Meßstrahl ein enggebündelter Lichtstrahl, beispielsweise ein Laserstrahl. Die Wellenlänge des Lichtes kann beliebig sein und auch ein breiteres Spektrum aufweisen. Bevorzugt ist allerdings, daß die Wellenlänge des Lichtstrahles eng begrenzt ist, beispielsweise auf den Infrarotbereich, oder daß sogar monochromatisches Licht verwendet wird.

Der Meßstrahl 9 trifft auf ein Objekt 8 und bildet dort einen Lichtfleck bzw. Lichtpunkt ab. Das von dem Objekt 8 diffus zurückgestrahlte Licht wird von einem im Gehäuse 1 fest angeordneten optischen Element 5, das beispielsweise ein Spiegel oder ein Prisma sein kann auf einen Mustergeber 4 geleitet. Dieser Mustergeber 4 formt das von dem optischen Element 5 auf ihn gerichtete Licht in bestimmter Weise um und bildet es als Muster auf einem Sensorfeld 3 ab. In einem einfachen Falle ist der Mustergeber 4 eine Schlitzblende, die die Abbildung eines Lichtpunktes zu einem dünnen, geraden Strich (Muster) umformt.

Das Sensorfeld 3 enthält in einer Reihe oder einer Matrixanordnung eine Vielzahl von lichtempfindlichen, unterscheidbaren Meßpunkten. Je nach gewünschtem Auflösungsvermögen wird man hier bis zu einigen 100 000 Meßpunkte vorsehen. Die einzelnen Meßpunkte können elektronisch von einer Signalverarbeitung 6 abgefragt werden. Aus der relativen Lage der von dem abgebildeten Muster auf dem Sensorfeld beleuchteten Sensorpunkte läßt sich dann von der Signalverarbeitung 6 auch das gewünschte Meßergebnis errechnen, beispielsweise der Abstand zwischen dem Sender 2 und dem Objekt 8. Vorzugsweise besteht das Sensorfeld 3 aus einem CCD-array (charge coupled device) bei welchem viele diskrete Meßpunkte sehr nahe nebeneinander liegen, womit man ein sehr gutes Auflösungsvermögen für die Messung erhält.

An die Signalverarbeitung 6 ist hier noch ein Speicher 7 angeschlossen. Statt des Speichers kann auch eine Ausgabeeinheit, beispielsweise ein LED- oder LCD-Display vorgesehen sein.

Da bei dem Sensor der Fig. 1 letztendlich ein Winkel ausgewertet wird, wird das Auflösungsvermögen natürlich um so größer, je größer der Abstand zwischen dem optischen Element 5 und der Lichtquelle 2 und der Abstand zwischen dem optischen Element 5 und dem Sensorfeld 3 sind. Weiterhin hängt das Auflösungsvermögen natürlich von der Anzahl und dem wechselseitigen Abstand der einzelnen meßempfindlichen Punkte auf dem Sensorfeld 3 ab. Bei den heute im Handel erhältlichen lichtempfindlichen "arrays" sind unterscheidbare meßempfindliche Punkte im $\mu$-Bereich zueinander beabstandet, so daß von dieser Seite her für die meisten Meßzwecke ein ausreichendes Auflösungsvermögen sichergestellt ist.

Bei heute im Handel erhältlichen CCD-arrays ist der Mittenabstand zweier benachbarter Meßpunkte etwa 13 $\mu$m. Wählt man den Abstand $1_2$ zu 40cm so ist das Auflösungsvermögen hinsichtlich Winkeländerungen ($\alpha$) gleich 1,862 x $10^{-3}$. Will man Abstände in der Größenordnung von 10m messen, so entspricht eine Winkeländerung um diesen Wert einer Längenänderung von D von ca. 8,13 mm.

Eine weitere Verbesserung des Auflösungsvermögens kann man durch den Mustergeber 4 erhalten. Formt der Mustergeber 4 den im Mittelpunkt des Spiegels 5 abgebildeten Lichtfleck nämlich zu einem schmalen Strich und orientiert man den Mustergeber so, daß dieser Strich schräg zu den Hauptachsen (x,y) des zweidimensionalen Sensorfeldes liegt, so kann man ähnlich einer "Noniusteilung" durch diese Maßnahme das Auflösungsvermögen um eine oder mehrere Zehnerpotenzen verbessern.

Dabei verwendet man statt einer Zeilenanordnung nun eine Matrix und formt durch den Mustergeber 4 den Lichtpunkt zu einem dünnen Strich, der schräg zur Matrix der Meßpunkte liegt. Hierdurch verbessert sich das Auflösungsvermögen beträchtlich, da eine Parallelverschiebung des abgebildeten Musters um Beträge, die deutlich kleiner als der Mittenabstand benachbarter Meßpunkte ist, bereits eine andere Kombination von Meßpunkten beleuchtet. Nimmt man beispielsweise einen Sensor mit 10 x 10 = 100 empfindlichen Meßpunkten und stellt den auf dem Sensorfeld abgebildeten dünnen "Strich" so, daß der erste Meßpunkt einer Zeile mit dem letzten Meßpunkt der nächsten Zeile verbunden ist, so werden also nur die beiden genannten Meßpunkte beleuchtet. Wenn sich der Strich nun um ein Zehntel des Mittenabstandes benachbarter Meßpunkte verschiebt (z. B. in Richtung der Y-Achse nach oben), so wird der vorletzte Meßpunkt der oberen Zeile beleuchtet, während in der unteren Zeile kein Meßpunkt mehr beleuchtet wird. Hiermit läßt sich also bei einer 10 X 10 Matrix das Auflösungsvermögen 14fachen. Verwendet man einen Sensor mit 500 X 500 Meßpunkten, so läßt sich das Auflösungsvermögen mit dieser Methode um das 500fache steigern. Voraussetzung ist, daß der sehr kleine Drehwinkel gegenüber den Hauptachsen des Sensorfeldes eingestellt werden kann. Wählt man den doppelten Betrag des Drehwinkels, so geht das Auflösungsvermögen auf das 250fache zurück.

Die optischen Elemente 5 können in Richtung des einfallenden Strahles vor dem Spiegel noch eine Linsenanordnung haben, die das Bild des Objektes auf den Mustergeber 4 und/oder das Sensorfeld 3 abbildet. Zusätzlich können noch Filter vorgesehen sein, die nur bestimmte Wellenlängenanteile der Strahlung durchlassen, bei infraroter Strahlung also Infrarotlicht. Damit werden störende Lichtanteile ausgefiltert und vom Sensorfeld aus "sieht" man nur den Lichtfleck der Strahlung 9, auf dem Objekt 8. Hieraus wird auch deutlich, daß am Objekt kein aktives Element w.z.B. ein Spiegel angebracht sein muß, da auch ein am Objekt 8 diffus gestreuter Strahl bzw. Lichtfleck auf dem Mustergeber 4 abgebildet wird.

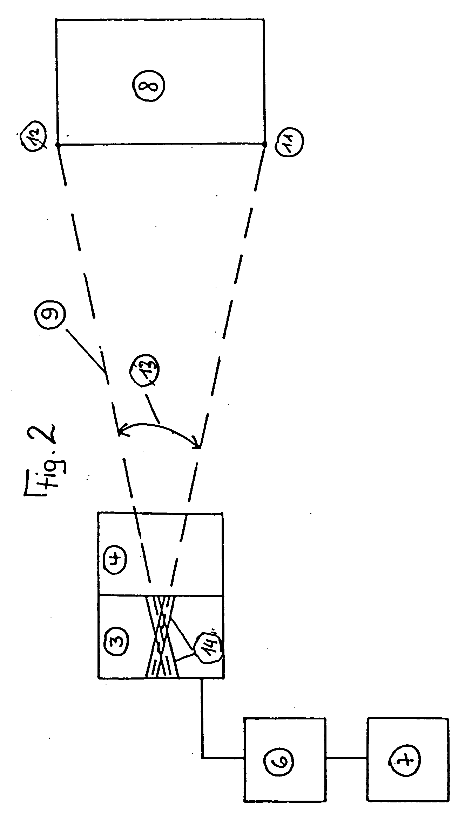

Fig. 2 zeigt schematisch ein Ausführungsbeispiel des Sensors zum Messen von Winkeln. Bei einem Ausführungsbeispiel der Erfindung hat der Sensor zwei Sender, deren Meßstrahlen 9 jeweils auf einen Punkt 11 bzw. 12, zwischen denen der Winkel 13 gemessen werden soll, gerichtet wird. Das Gehäuse des Sensors wird während der Messung fixiert gehalten, während die beiden Sender relativ zum Gehäuse geschwenkt werden können. Der Mustergeber 4 erzeugt dann auf dem Sensorfeld 3 zwei Muster, deren relative Lage auf dem Sensorfeld ein Maß für den zu messenden Winkel 13 ist. Auch hier werden wieder die "erregten" Punkte auf dem Sensorfeld 3 von der Signalverarbeitung 6 abgefragt, wobei deren Koordinaten oder gegebenenfalls bereits mit einer mathematischen Funktion transformierten Werte im Speicher 7 abgelegt werden.

Nach einer zweiten Variante ist es auch möglich, im Sensor nur einen Sender zu verwenden. Hierbei werden dann die beiden Punkte 11 und 12 zeitlich nacheinander ausgemessen. Dabei wird wiederum das Gehäuse fixiert und der Lichtstrahl zunächst auf den einen Punkt gerichtet und die Koordinaten des auf dem Sensorfeld 3 beleuchteten lichtempfindlichen Punkte gespeichert. Sodann wird der Lichtstrahl auf den anderen Punkt 12 gerichtet und der zweite Meßvorgang durchgeführt. Aus den beiden Meßvorgängen läßt sich dann der Winkel 13 bestimmen.

Hierbei ist der Mustergeber 4 beweglich. Enthält der Mustergeber beispielsweise eine Schlitzblende, so wird bei jeder Messung diese Schlitzblende einmal über den vollen Verschiebungsbereich bewegt, womit man für jede Messung eine definierte Bestrahlung des Sensorfeldes erhält. In diesem Falle könnte das auf dem Sensorfeld 3 abgebildete Muster 14 aus zwei sich schneidenden geraden Strichen 14 bestehen, deren relative Lage zueinander ein Maß für den Winkel 13 ist. Mit dieser Anordnung lassen sich sowohl Horizontalwinkel als auch Vertikalwinkel zwischen zwei Punkten bestimmen.

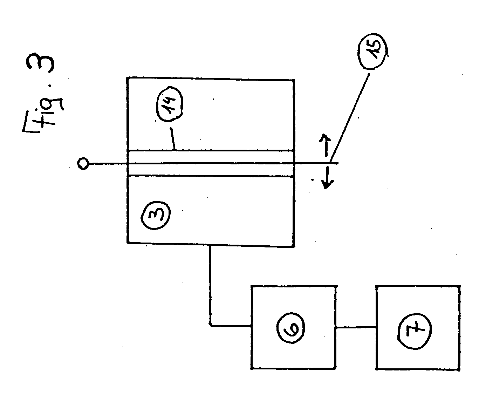

Fig. 3 zeigt ein weiteres Ausführungsbeispiel der Erfindung, mit dem Neigungen bzw. Winkel von Objekten gegenüber der Lotrechten gemessen werden können. Als Mustergeber wird hierbei ein Pendel 15 verwendet, das unmittelbar von einer Lichtquelle bestrahlt wird. Das Gehäuse des Sensors wird bei der Messung an das auszumessende Objekt gelegt und nimmt dabei dessen Neigung ein. Das Pendel 15 richtet sich nach der Schwerkraft aus, so daß das Abbild bzw. Muster 14 des Pendels 15 auf dem Sensorfeld 3 je nach Neigung des auszumessenden Objektes unterschiedliche lichtempfindliche Punkte bestrahlt, woraus die gesuchte Neigung ermittelt werden kann.

Statt eines Pendels kann man als Mustergeber auch die Magnetnadel eines Magnetkompasses anordnen, wobei dann wiederum die Magnetnadel auf dem Sensorfeld 3 abgebildet wird. Man erhält also einen Magnetkompass.

Nach einem weiteren Ausführungsbeispiel der Erfindung kann das optische Element 5 auch pendelnd kardanisch aufgehängt sein, so daß man Höhen über einer Bezugsebene (Ebene im Meßort, die senkrecht auf dem Lot zum Erdmittelpunkt steht) messen kann. Zur Messung von Höhenwinkeln von Objekten, die so weit entfernt sind, daß sie mit dem Lichtstrahl des Senders nicht mehr ausreichend beleuchtet werden können, kann auch eine optische Visiereinrichtung vorgesehen sein. Als Meßstrahl wird dann ein Lichtstrahl verwendet, der in der Visierebene liegt und unmittelbar über die optischen Elemente 5 auf das Sensorfeld 3 abgebildet wird. Ein spezielles Anwendungsbeispiel hierfür ist, beispielsweise ein Fliegersextant. Bei sehr entfernt liegenden Objekten (z.B. Sternen) ist der Parallaxenfehler vernachlässigbar klein.

Mit dem Sensor nach der Erfindung können die verschiedensten Messungen durchgeführt werden. Bevorzugte Anwendungsgebiete sind: Messung von Winkeln (horizontal oder vertikal), von Breiten von Objekten, wenn der Abstand zum Objekt bekannt ist, von Höhen gegenüber einer Bezugsebene, von Neigungen gegenüber der Lotrechten, von Winkeln und Richtungen bezogen auf magnetisch Nord. Weiterhin können auch Volumina geometrischer Körper oder Profile derselben vermessen werden und auch Füllstände, da auch diese Messungen auf Abstands- und Winkelmessungen rückgeführt werden können.

Für bestimmte Anwendungsfälle genügt es, wenn das Sensorfeld eindimensional ist, also nur eine Reihe von Lichtempfindlichen Punkten hat. Bei anderen Messungen empfiehlt sich ein zwei- oder mehrdimesionales Sensorfeld. Ein Sensorfeld mit beispielsweise drei Dimensionen läßt sich dadurch erzeugen, daß mehrere ebene Sensorfelder räumlich zueinander angeordnet werden, beispielsweise in Form einer "Kuppel". In Zusammenwirken mit einem bewegten Mustergeber läßt sich dann der gesamte Bereich "abtasten" wobei beispielsweise über die Fokussierung bzw. Breite des auf dem Sensorfeld abgebildeten Lichtfleckes die gewünschten Meßergebnisse erhalten werden.

In diesem Zusammenhang sei betont, daß das Meßergebnis ausschließlich von den bestrahlten meßempfindlichen Punkten des Sensorfeldes abhängt, daß also bei bewegtem Mustergeber oder bewegten optischen Elementen deren jeweilige Stellung nicht abgefragt werden muß.

Der Mustergeber kann beliebige Muster abbilden und ist nicht auf eine bestimmte Optik oder bestimmte Blendenformen beschränkt. Primärer Zweck des Mustergebers ist es, das von den optischen Elementen weitergegebene "Bild" des Objektes so zu verformen, daß es für die Auswertung besonders günstig ist, sei es daß es auf einen Punkt oder einen dünnen Strich reduziert wird, oder sei es auch auf eine Ellipse oder einen Kreis, wobei dann beispielsweise die Lage des Kreismittelpunktes bzw. der Hauptachsen der Ellipse sowie die Länge der Hauptachsen der Ellipsen bzw. Radius des Kreises Rückschlüsse auf das Meßergebnis zu lassen.

## Patentansprüche

1. Sensor mit integrierter Signalverarbeitung mit einem Gehäuse, einer darin angeordneten Lichtquelle (2) zur Erzeugung einer Lichtstrahlung (9), mit von der Lichtquelle (2) in definiertem Abstand angeordneten optischen Elementen (5), die mit Lichtstrahlung beaufschlagbar sind, mit einem Sensorfeld (3), das mit von den optischen Elementen (5) austretender Lichtstrahlung beaufschlagbar ist und eine Vielzahl unterscheidbarer, lichtempfindlicher Punkte aufweist, mit einem im Strahlengang zwischen den optischen Elementen (5) und dem Sensorfeld (3) angeordneten Mustergeber (4) und mit einer Auswerteeinrichtung (6), die an das Sensorfeld (3) angeschlossen ist und mit der in Abhängigkeit vom elektrischen Zustand der lichtempfindlichen Punkte die gewünschte Meßgröße bestimmbar ist, dadurch gekennzeichnet, daß der Mustergeber (4) gegenüber dem Sensorfeld (3) verschiebbar angeordnet ist.

2. Sensor nach Anspruch 1, dadurch gekennzeichnet, daß mindestens eine verschwenkbare Lichtquelle (2) in dem Gehäuse (1) angeordnet ist, von der ein Strahl (9) zur Reflektion auf ein Objekt (8) richtbar ist, von welchem Lichtstrahlung reflektiert wird und die optischen Elemente (5) beaufschlägt.

3. Sensor nach Anspruch 2, dadurch gekennzeichnet, daß mehrere gegenseitig verschwenkbare Lichtquellen (2) in dem Gehäuse (1) angeordnet sind.

4. Sensor nach Anspruch 2 oder 3, dadurch gekennzeichnet, daß der Mustergeber (4) translatorisch parallel zur Ebene des Sensorfeldes (3) oder rotatorisch angeordnet ist.

5. Sensor nach Anspruch 1, dadurch gekennzeichnet, daß der im Strahlengang zwischen den optischen Elementen (5) und dem Sensorfeld (3) angeordnete Mustergeber ein Pendel (15) ist und daß die Strahlungsquelle (2) das Pendel (15) unmittelbar bestrahlt, wobei die Neigung des Gehäuses (1) gegenüber dem Pendel (15) gemessen wird.

6. Sensor nach Anspruch 1, dadurch gekennzeichnet, daß der im Strahlengang zwischen den optischen Elementen (5) und dem Sensorfeld (3) angeordnete Mustergeber eine drehbar gelagerte Magnetnadel eines Magnetkompasses ist und daß die Strahlungsquelle (2) die Magnetnadel unmittelbar bestrahlt, wobei die Winkelstellung der Magnetnadel gegenüber magnetisch Nord gemessen wird.

## Claims

1. A sensor with integrated signal processing, having a housing, a light source (2) which is arranged in the latter and is for producing light emission (9), having optical elements (5) which are arranged at a specified distance from the light source (2) and can be hit by light emission, having a sensor panel (3) which can be hit by light emission emerging from the optical elements (5) and which has a plurality of distinguishable light-sensitive points, having a pattern producer (4) arranged in the beam path between the optical elements (5) and the sensor panel (3), and having an evaluation device (6) which is connected to the sensor panel (3) and by means of which the desired measurement can be determined dependant on the electrical state of the light-sensitive points, characterized in that the pattern producer (4) is arranged so as to be movable in relation to the sensor panel (3).

2. A sensor in accordance with Claim 1, characterized in that arranged in the housing (1) there is at least one pivotable light source (2) from which a beam (9) for reflection can be directed onto an object (8) from which light emission is reflected and hits the optical elements (5).

3. A sensor in accordance with Claim 2, characterized in that a plurality of light sources (2) pivotable relative to one another are arranged in the housing (1).

4. A sensor in accordance with Claim 2 or 3, characterized in that the pattern producer (4) is arranged translationally parallel to the plane of the sensor panel (3) or rotatively.

5. A sensor in accordance with Claim 1, characterized in that the pattern producer arranged in the beam path between the optical elements (5) and the sensor panel (3) is a pendulum (15), and in that the emission source (2) directly irradiates the pendulum (15), the inclination of the housing (1) in relation to the pendulum (15) being measured.

6. A sensor in accordance with Claim 1, characterized in that the pattern producer arranged in the beam path between the optical elements (5) and the sensor panel (3) is a rotationally mounted magnetic needle of a magnetic compass, and in that the emission source (2) directly irradiates the magnetic needle, the angular position of the magnetic needle in relation to magnetic North being measured.

**Revendications**

1. Capteur avec un traitement intégré de signaux composé d'un boîtier dans lequel est disposée une source de lumière (2) susceptible de générer un rayonnement lumineux (9) ayant des éléments optiques (5) disposés à une distance définie de la source de lumière (2) qui sont susceptibles d'être frappés par le rayonnement lumineux, avec un champ de capteurs (3) susceptible d'être frappé par le rayonnement quittant les éléments optiques (5) et qui comportent une pluralité de points photosensibles, capables d'être distingués l'un de l'autre, avec un générateur de formes (4) disposé dans le chemin du rayonnement entre les éléments optiques (5) et le champ de capteurs (3), et avec un dispositif d'évaluation (6) qui est connecté au champ de capteurs (3) et au moyen duquel la valeur de mesure recherchée peut être déterminée en fonction de l'état électrique des points photosensibles, caractérisé en ce que le générateur de formes (4) est disposé de façon déplaçable par rapport au champ de capteurs (3).

2. Capteur selon la revendication 1, caractérisé en ce qu'au moins une source lumineuse (2) qui peut pivoter est disposée dans le boîtier (1) à partir de laquelle un rayon (9) peut être dirigé sur un objet (8) à partir duquel un rayonnement lumineux est réfléchi et vient faire impact sur les éléments optiques (5).

3. Capteur selon la revendication 2, caractérisé en ce qu'une pluralité de sources lumineuses (2) sont disposées, avec possibilité de pivoter, dans le boitier (1).

4. Capteur selon la revendication 2 ou 3, caractérisé en ce que le générateur de formes (4), est disposé parallèlement au plan du champ de capteurs (3) ou est disposé de façon rotative.

5. Capteur selon la revendication 1, caractérisé en ce que le générateur de formes disposé dans le trajet du rayonnement entre les éléments optiques (5) et le champ de capteurs (3) est un pendule (15) et en ce que la source de rayonnement (2) illumine directement le pendule (15), l'inclinaison du boîtier (1) par rapport au pendule (15) étant mesurée.

6. Capteur selon la revendication 1, caractérisé en ce que le générateur de formes disposé dans le chemin de rayonnement entre les éléments optiques (5) et le champ de capteurs (3) est une aiguille magnétique, supportée à rotation, d'un compas magnétique et en ce que la source de rayonnement (2) illumine directement l'aiguille magnétique, la position angulaire de l'aiguille magnétique, étant mesuré par rapport au Nord magnétique.

Fig. 1

Fig. 2

EP 0 280 110 B1

Fig. 3

9